# EUROPEAN PATENT SPECIFICATION

(11) **EP 1 201 387 B1**
(45) Date of publication and mention of the grant of the patent: **05.04.2006**
(21) Application number: 00830651.6
(22) Date of filing: 04.10.2000
(51) Int. Cl.: B29B 7/28

(54) **Method for regulating the manufacturing process in a mixer**
Verfahren zur Regelung des Produktionsablaufs in einem Mischgerät
Procédé pour réguler la fabrication dans un mélangeur

(43) Date of publication of application: 02.05.2002
(73) Proprietor: PIRELLI PNEUMATICI Società per Azioni, 20126 Milano (IT)
(72) Inventor: Proni, Antonio, 26900 Lodi (IT); Balasso, Daniele, 24033 Calusco d'Adda (Bergamo) (IT)
(74) Representative: Ferroni, Filippo

(56) References cited:
- EP-A- 0 244 121
- EP-A- 0 728 803
- US-A- 4 707 139

## Description

The present invention relates to the manufacturing process of mixtures and compounds made of rubber and other ingredients, for the production of tyres and components thereof such as tread bands and the like.

In general the manufacturing process considered herein is the mixing process performed using mixers of any type, namely both continuous and discontinuous mixers. Continuous mixers essentially consist of a cylindrical chamber inside which an endless screw (referred to hereinbelow as "rotor") rotates and conveys the material being processed from one end to the other of the above mentioned chamber, in a continuous manner: mixing of the material occurs during passage inside the cylindrical chamber.

Discontinuous (closed) mixers essentially consist of a mixing chamber containing a pair of rotors which rotate in opposite directions to each other: the material is processed in predefined separate quantities (batches), which are completely discharged from the mixer at the end of the process, before starting the processing of a new batch.

The present invention is particularly suitable for the latter mixers and, among them, for those commonly known by the name "Banbury®" or "Intermix®".

With these devices the various mixing operations required in the tyre production cycle, are performed; for example, they serve to combine the basic ingredients from which there are obtained the intermediate mixtures then used during subsequent processings, or to mix these mixtures with others which have a different composition so as to form particular "blends", or to produce the final compounds to be vulcanized.

In this connection it is pointed out that for an easier understanding of this description, the term "mixture" will be intended to mean the general intermediate product obtained during the various operating phases of the production cycle, while the term "compound" will indicate the final mixing product, resulting from the addition of the crosslinking system to the mixture.

Control of the processing conditions in the mixers considered herein has a very important role in the quality of the end product.

Indeed, if during the manufacturing process excessively high temperatures are reached or if the applied mixing energy is too high, the chemical and physical properties of the processed materials may change such that the product subsequently obtained must be discarded or in any case it does not satisfy the required standards of quality.

For example, in certain cases there will be found mechanical and/or rheological properties (hardness, viscosity, elasticity, etc.) lower than predefined requested values or, in other cases, there will be difficulties during subsequent processing of the compound with the presence of possible surface defects or a non-uniform quality of the compounds obtained using the same ingredients.

The variables which influence the manufacturing process in the mixers are, however, many and this makes it difficult to control the operating conditions during the course of the production cycle.

Among these variables there can be mentioned the characteristics of the ingredients used for the compounds and the sequence with which they are introduced into the mixer, the temperature fluctuations of the processed mixtures, the pressure of the pressing ram inside the closed mixer, the torque and the speed of the rotor or rotors, the mixing time and energy, the mixer filling level, etc.

From a practical point of view, the process parameters may be divided into direct and indirect parameters, wherein the former are those acted upon by the mixer control system in order to vary the latter: for example, the pressure of the ram and the speed of the rotors may be increased or decreased so as to vary the temperature and/or the energy conferred to the mixture.

Recently, various solutions have been proposed for controlling the working process in closed mixers, based on these parameters.

One of these solutions is described in US Patent No. 4,455,091, in the name of Bamberger et al.; in such document it is suggested to control the working of the mixtures by regulating their temperature during the process, together with the energy supplied to the rotors of the mixer.

For this purpose, it is first obtained experimentally a curve showing the desired temperature as a function of the energy, for a given process to be performed.

Then this experimental curve is used as a reference parameter for regulating the actual process by varying over time the speed of the rotors and/or the pressure of the ram, so as to maintain the temperature detected consistent with the reference temperature.

This manner of operating allows to eliminate the non-uniform quality referred to above of the compounds or mixtures having the same composition, caused by the different initial temperatures of the materials which may occur in summer or in winter, or when a working cycle is performed with the mixer still cold.

However this solution appears to be not very flexible because it requires that the course of the temperature and of the power supplied to the system be continuously controlled during the whole mixing process.

This is not always easy because during the working cycle, situations (such as the movement of the pressing ram or any other unforeseen technical event) may arise that modify the mixing process with respect to the nominal conditions, thereby rendering difficult to regulate the system subsequently for bringing it back to the desired nominal conditions.

Similar arguments apply also to another method for controlling the manufacturing process of compounds and mixtures in a closed mixer, described in international patent application WO-A-99/24230, in the name of Hanna Rubber Compounding.

In this application it is described how, in order to achieve a constant quality between one batch and the other, it is sufficient to control continuously the profile of the temperature as a function of the time during the whole process and correct it, where necessary, to follow a predetermined reference curve.

Correction of the process temperature is performed by intermittently varying the speed of the rotors and/or the pressure of the ram each time there is a deviation beyond predefined tolerances between the temperature detected and the reference curve.

The latter and the associated tolerance range are obtained experimentally by means of mixing tests.

From what has been set out just above, it may be seen that also in this case the control system does not appear to be very flexible.

For example, if it were required to reduce the planned duration of the processing cycle in the mixer for increasing the hourly production, the temperature versus time reference curve should change because a shorter cycle (albeit with the same operating phases) would require a curve which is also shorter and generally has a steeper gradient.

Consequently, in such circumstances it would be necessary to obtain a new temperature versus time experimental curve corresponding to the shorter duration of the operating cycle to be defined; this would require a series of further preliminary tests in order to obtain this curve, with obvious negative consequences as regards the processing duration and costs.

More generally, it may be concluded that with this manner of operating, the same drawbacks will arise every time it is required to modify the working cycle; furthermore, the fact that in order to control mixing it is necessary to detect (and if necessary correct) the temperature continuously during the whole process, gives rise to the same difficulties mentioned above in connection with the Bamberger US patent.

Other known methods of processing polymer-based compounds and mixtures are disclosed in EP-A-244121, US-A-4,707,139 and EP-A-*72*8 803.

However in the first of them there is no control of the intermediate working phases, but only the adjustment of the ram pressure and rotor speed in order to obtain final target values at discharge of the rubber compound from the mixer, as a consequence this method is not suitable for processing compounds (like those with silica) where it is necessary to maintain preset working conditions in some particular intermediate phases before final discharge.

The same is true also for US-A-4,707,139 which concerns the discharge of the material from a continuous mixer controlled in relation to the torque produced by the motor which drives the bladed rotors, whereas EP-A-728 803 deals with thermal and chemical conditions to be met in the manufacturing of silica-based rubber compounds, but not to the method of controlling such conditions.

The present invention aims at improving the state of the art considered heretofore.

In other words, it is the object of the invention to provide a method for regulating the manufacturing process of compounds and mixtures in a mixer, which is able to achieve a uniform quality of the produced batches having the same composition, and which is operationally flexible so as to ensure said quality, even when there is a variation in the operating conditions under which processing may be performed.

This object is achieved according to the invention by the method as defined in claim 1. Particular embodiments of the invention are the subject of the dependent claims.

The invention arises from the Applicant's perception that it is not necessary to regulate the temperature of the mixture or the energy used during mixing and/or other indirect process parameters, continuously throughout the whole processing.

In accordance with the present invention a method has been developed wherein processing is firstly divided into successive phases: within these phases it is possible to approximate the profile of the various process parameters with rectilinear segments.

On the basis of this principle, in accordance with the method according to the invention, for the various phases the desired variation over time Δparameter/Δtime, is determined for at least one indirect process parameter; this variation will depend on each case and will be determined preliminarily on the basis of the working cycle to be performed, the composition of the mixture, the duration of the phase and other factors.

By tracing the parameter P on a diagram as a function of the time, the ratio ΔP/Δt is the gradient of the rectilinear segment which approximates the reference curve during that phase.

The regulation of the working process during its phases is performed by using as reference values those of the rectilinear segments relating to one or more indirect process parameters.

For this purpose it is possible to use, during the various phases, one or more of the following parameters: temperature of the mixtures or the compounds, quantity of energy supplied, torque and/or power applied to the rotors, degree of progress of any chemical reactions between some of the ingredients such as, for example, the polymer base, the silica and the silane.

Regulation of the working process in the invention is preferably carried out by choosing for each phase the indirect parameter of greatest importance for the quality of the end product to be obtained.

In particular, this is carried out by correcting during one or more predetermined phases, preferably using an algorithm of the proportional-integral type, the speed of the rotors and/or the pressure of the ram in order to obtain a rectilinear trend of the selected indirect parameter, having the same gradient as that of the reference segment.

Further advantages of the present invention will emerge more clearly from the description of an embodiment thereof, set out hereinbelow with reference to the attached drawings and tables, wherein:
- Fig. 1 shows a closed mixer (of the Banbury® type) in which the method according to the invention is implemented;
- Fig. 2 is a diagram showing the profiles traced of some process parameters relating to a working process carried out in a mixer like that of Fig. 1;

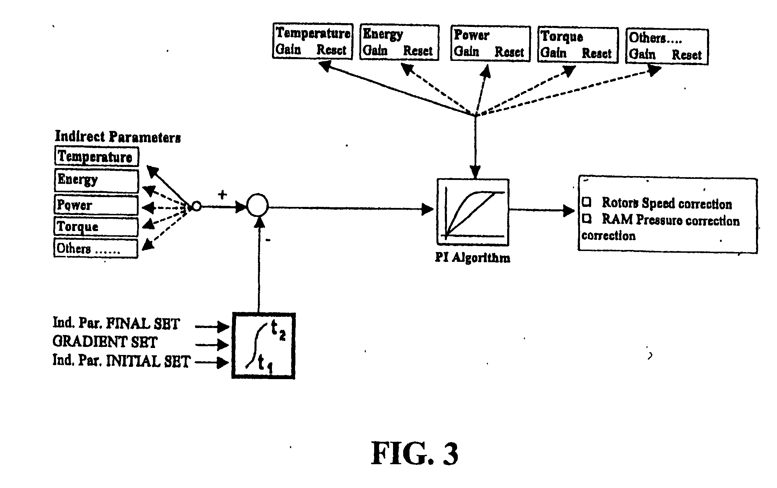

- Fig. 3 is a block diagram which illustrates the regulating method according to the invention.

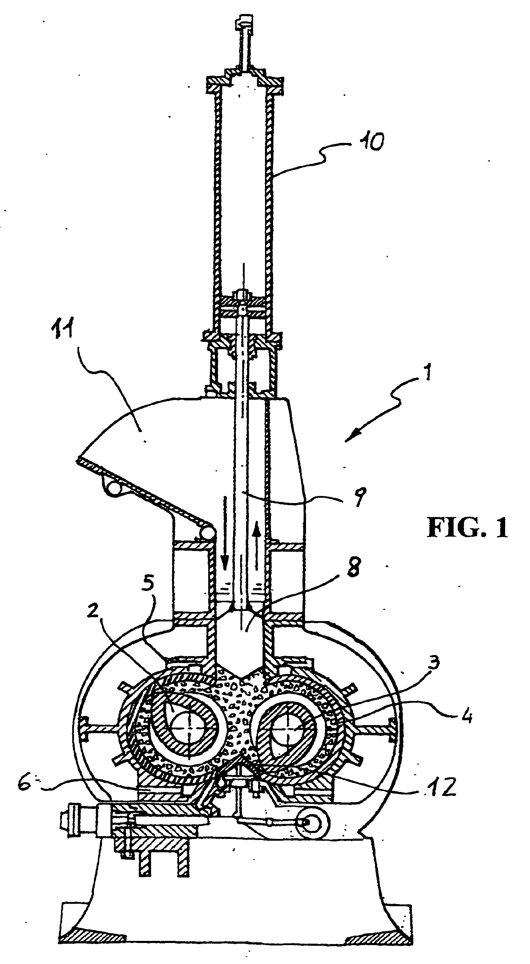

For better understanding the invention, the explanation which follows will refer without any limiting intention, to the closed mixer of Figure 1 and to the related method of processing compounds and mixtures.

With reference to the first figure, the mixer 1 shown therein comprises a pair of tangential rotors 2 and 3 which rotate in opposite directions inside a mixing chamber 4 cooled by water circulating inside a series of adjacent channels 5, 6.

The mixer 1 comprises the usual pressing ram 8 fixed to the end of a rod 9 actuated by a pneumatic (or hydraulic) cylinder 10.

The mixer 1 is also provided, for the introduction inside it of the material to be processed, with a lateral hopper 11; discharging of the processed mixtures or compounds instead occurs underneath, through an opening present in the bottom of the mixing chamber 4 and closed by a hydraulic or pneumatic obturator device 12.

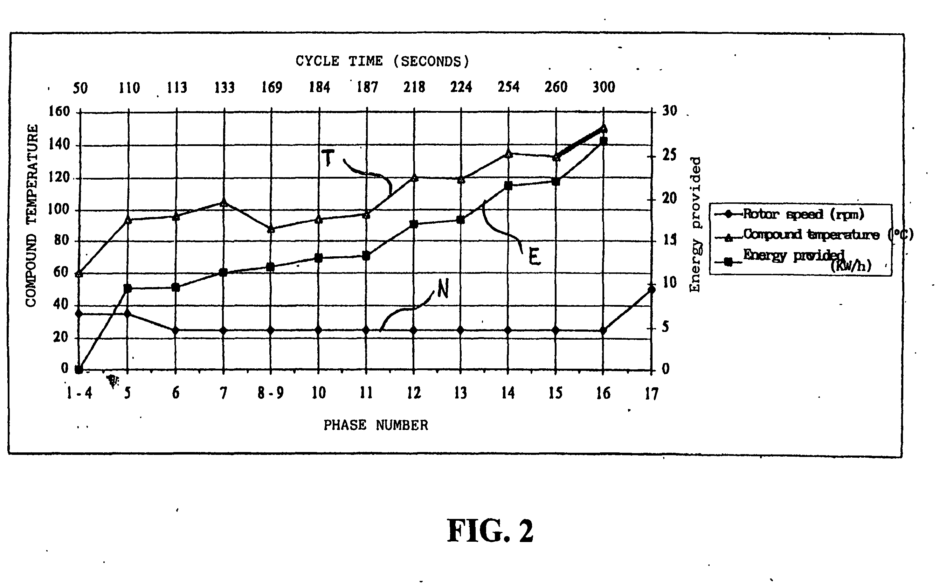

An example of working process performed in the mixer described above is illustrated in the graph of Figure 2, which shows in segmented lines approximating the actual trend with respect to the time, the temperature T of the mixture, the number of rotations N of the rotors and the energy E absorbed during the operating cycle.

Figure 2 refers to the processing of a typical mixture for silica-reinforced compounds, whose composition is set out below for purpose of indication, with the variation ranges of each ingredient and the quantities expressed in "phr", i.e. parts by weight for 100 parts of polymer material:

| | |
|---|---|
| Polymer base | 100 |
| Carbon black | 0-80 |
| Silica | 10-80 |
| Bonding agent (of the silica) | 4-15% of silica |
| Zinc oxide (ZnO) | 1-3 |
| Stearic acid | 0-3 |
| Anti-aging agents | 1-3 |
| Plasticizing oil | 0-30 |
| Anti-ozone wax | 0.5-3 |
| Specific chemical ingredients | 0-15 |

In order to obtain the mixtures, it is required to add the crosslinking system to these ingredients in the usual quantities, depending on the composition of the mixture; this system preferably consists of sulphur (0.5 to 2.5 phr) and vulcanization accelerators.

Among the preferred polymer bases there are polymers or copolymers with an unsaturated chain obtained by means of polymerisation of aliphatic or aromatic vinyl monomers and/or conjugated dienes.

Silica has a surface area, measured using the BET method, preferably of between 100 and 300 m²/g and preferably silanes are used as bonding agent thereof.

The processing cycle, to which the graph of Fig. 2 refers, is divided into successive phases which are indicated with a progressive numbering from 1 to 17 in the table hereinbelow:

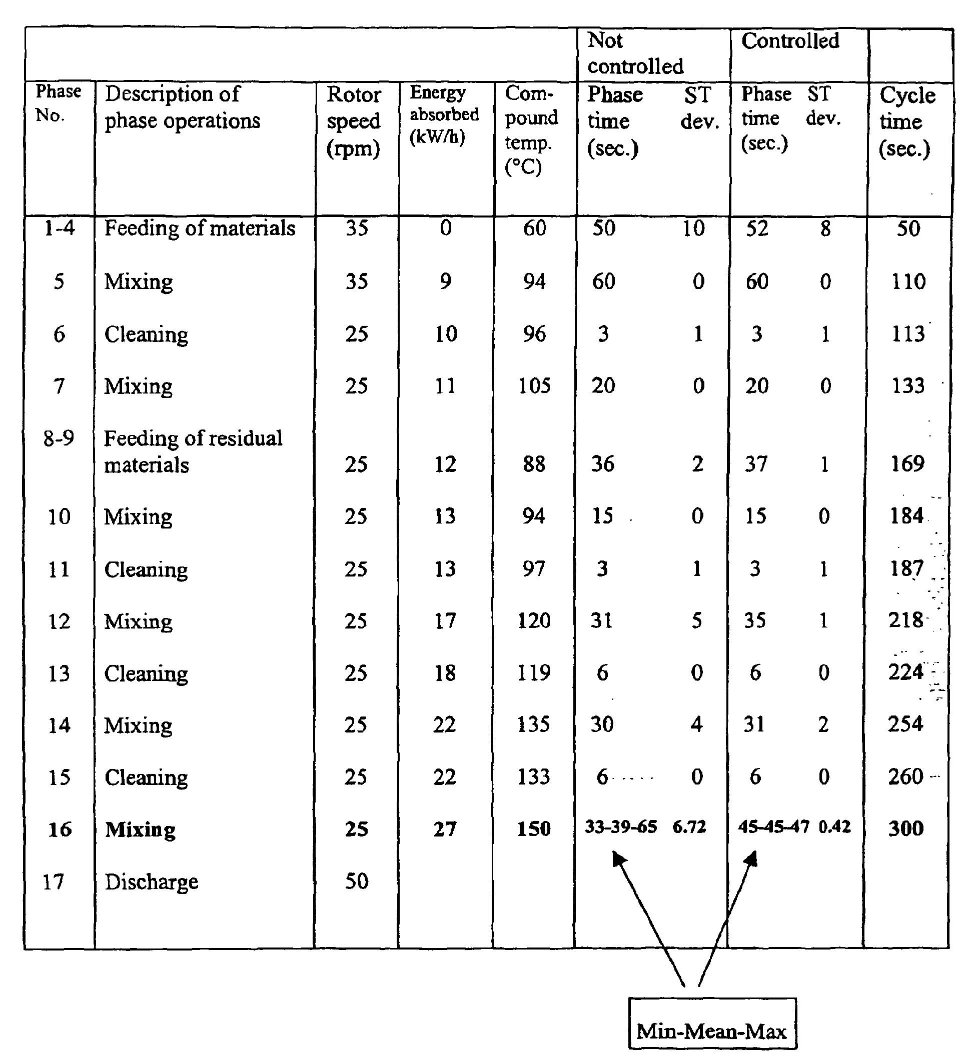

In the first of these phases the rotors 2 and 3 of the mixer 1 are brought to the required speed for the initial introduction of the ingredients via the hopper 11; after that, in phases 2-4 the polymer materials, the silane, the carbon black and/or the silica are fed via the hopper.

In this connection it should be noted that the diagram according to Fig. 2, for the sake of simplicity, shows the profiles of the process parameters only starting from phase 4.

Once the first introduction of the basic ingredients has been completed, the piston is lowered and then the temperature T and the energy E rapidly increase during phase 5 which has a predefined duration (60 seconds), and then increase only slightly until phase 7 which also has a predefined duration.

During this latter period there is a gradual reduction in the viscosity of the mixture and therefore a gradual decrease in the power required to mix it, as can be deduced from the minimum gradient of the line E of the energy.

Moreover, in phase 6 the speed of the rotors is reduced in connection with the raising of the piston which is performed so as to favour the cleaning thereof from any residual non-mixed initial ingredients.

After this, addition of such ingredients is completed in order to obtain the final composition of the mixture (phases 8-9), thus amalgamating them with those already present in the mixer (phases 10-12).

During these phases the working of the mixture causes a gradual increase in its temperature, up to a predefined value (of about 120°C) for which it is considered that dispersion of the silica has been completed and so-called "silanization" may begin.

The latter is a reaction through which chemical bonding of the silica to the polymer matrix via the silane is performed; in the example of Fig. 2, silanization starts with the phase 13, after about 218 seconds the start of the working process.

The silanization then continues in the successive phases (14-16) until the end of processing (phase 17), when the mixture is discharged; during this period the temperature is kept within a range of predefined values, which are known to persons skilled in the art and outside of which the desired qualities of the semi-finished product to be manufactured are not reached.

The temperature and energy lines T and E in the graph of Fig. 2 were obtained experimentally on the basis of a series of repeated tests of the same processing cycle, reporting the average values of T and E at the start of the various phases.

These lines show how, in connection with said phases, it is possible to approximate with a rectilinear segment the pattern of the process parameters.

The regulating method according to the present invention takes advantage of this possibility.

For this purpose it devises to determine for one or more processing phases, the indirect parameter P which is most significant or most critical for the concerned phase; this will depend on the processing cycle to be performed.

For example, in one phase the most important parameter to be controlled may be the temperature, in another phase the energy, in other phases the torque or the power applied to the rotors, etc.

Thereafter it is determined the linear variation through the time, ΔP/Δt, for that parameter during the associated phase, starting from an initial value P_{i;} in this manner it is possible to identify the reference progression for that parameter during the phase, which consists of the rectilinear segment joining the values of the parameter P at the start and at the end of the phase.

Basically, in the method according to this invention the reference curve used for regulation (which in the Hanna Compounding patent was the temperature curve) is approximated during the various phases with a rectilinear segment.

This segment provides the values needed by the mixer regulating system (PLC or the like), for calculating the corrections to be made on the pressure of the ram and/or the speed of the rotors.

In particular, according to a preferred embodiment of the invention the system operates using a logic of the proportional-integral type, which is summarised in schematic form in Figure 4.

As can be seen, for a given phase the gradient ΔP/Δt of the rectilinear segment relating to the most significant or critical indirect parameter for that phase, as well as its initial value, are entered.

Preferably at the same time two so-called "gain" and "reset" values are also entered; the first value is a coefficient for multiplying the difference between the detected value of the indirect process parameter and the corresponding value of the rectilinear reference segment, while the second value is a coefficient for dividing the correction to be applied. For example, by entering a reset value equal to 10, any correction to the number of rotations of the rotors equal to 2 rpm is imparted with a series of stepwise variations of 0.2 rpm per second.

Regulation according to the present invention was applied to phase 16 of a series of experimental tests, whose duration has been shown in the penultimate column of the preceding table (marked "controlled" at the top).

More specifically, the regulation concerned the pattern of the temperature during silanization of the mixtures, with the aim of obtaining a more uniform duration of phase 16 which terminates when the mixture reaches the temperature of 150°C.

As can be seen, in the case of batches processed using the method according to the invention, an average duration of the phase 16 equal to 45 seconds and a standard deviation of 0.42 seconds was obtained.

When no regulation of phase 16 is provided, on the other hand, it can be seen from the values shown in the column marked "not controlled" in the abovementioned table (which refers to the tests used to obtain the graph according to Fig. 2) that attainment of the predefined temperature of 150°C for phase 16 occurs with greater lack of uniformity as demonstrated by the standard deviation of 6.72 sec. with respect to a mean of 39 seconds.

In the case referred to it must be emphasized that the smaller standard deviation for the duration of phase 16 (0.42 sec.) obtained with the abovementioned temperature regulation, compared to the standard deviation (6.72 sec.) present in the same phase when no temperature regulation is carried out, constitutes an important result obtained by the method according to the invention.

Indeed, as already mentioned, during this phase silanization takes place, whereby it is necessary to keep the temperature of the mixture within a range of well-defined values.

With the method according to the invention, in addition to obtaining this result it is also possible to increase the average duration of the aforesaid phase (45 seconds instead of 39), so as to favour the development of the reaction between silane, polymer base and silica, thus achieving a better silanization in the processed mass.

From the foregoing description it is possible to understand how the method according to the present invention achieves the objects set out initially.

Indeed it renders possible to regulate processing of the mixtures and the compounds in a flexible manner, so as to adapt efficiently the production process to the changes in the operating conditions likewise, for example, the duration of the production cycle or some parts thereof, which occur in practice.

This result is obtained owing to the division of the working process into a series of successive phases, during which the pattern, as a function of time, of the process parameters such as temperature, energy, torque, etc., may be approximated with a rectilinear segment.

The various segments provide the basis for the necessary regulation.

Indeed, for the different processing phases it is possible to establish a variation ΔP/Δt of the most important parameter to be controlled; this variation corresponds to the gradient of the associated segment during that phase and provides the reference values necessary for regulation.

For this purpose it is sufficient to set the gradient and the values of the associated rectilinear reference segment, in order to be able to apply the proportional-integral regulating algorithm described above.

Furthermore, should it be required to modify the production cycle by increasing or reducing the duration of one or more phases (or of the entire cycle), it is sufficient to update only the gradient of the rectilinear reference segments, without having to modify the regulating algorithm as a whole.

This is not possible in the known state of the art considered above where, if it is required to modify the duration of the working process or some phase thereof, a new reference curve must be provided by means of experimental tests.

Moreover, it must be pointed out that the method according to the present invention is valid for all the indirect process parameters which affect processing.

In other words, it may be stated that the logic by means of which regulation of the temperature was carried out in the example considered above, is also applicable to the other parameters such as the energy supplied to the rotors, the torque and/or the power applied to them, the degree of progress of the chemical reactions between the ingredients of the mixture such as silanization and the like, etc.

To this end it will be sufficient that for each processing phase in which regulation is to be performed, the "gain", "reset" and gradient values of the reference segments for the selected parameter be input in the control system.

Since the regulating algorithm should be preferably the same, processing is controlled in a manner similar to that already mentioned, without having to make modifications to the system.

In particular, owing to this flexibility of the regulating method according to the invention, it is possible to use for the various processing phases the indirect process parameter which is most suitable for the final result to be obtained.

On the contrary, in the known regulating systems similar circumstances would require the provision of a respective reference curve for each process parameter, with a specific series of experimental tests.

The method according to the present invention is particularly suitable for processing mixtures for silica-reinforced compounds.

In these processing operations, indeed, there are some critical operations such as the silanization mentioned above or dispersion of the silica in the polymer mass, which are of crucial importance for the quality of the semi-finished product obtained.

These operations are suit well for division into successive phases (such as, for example, the silanization phases 13-16 in the graphs according to Fig. 2), during which the pattern of the indirect process parameters may be defined by the segments so as to form the broken or segmented line already mentioned.

However, nonetheless, the same criteria may also be applied to the processing of silica-free compounds.

## Claims

1. Method for processing polymer-based compounds and mixtures, which includes regulation of at least one indirect process parameter performed by operating on at least one direct process parameter, **characterized in that** it comprises the following phases:
- dividing up processing into a plurality of successive phases;
- determining a linear reference variation, with respect to time (ΔP/Δt), of at least one indirect process parameter in at least one of said phases;
- regulating at least one of said direct process parameters, so as to vary said at least one indirect parameter in accordance with the linear reference variation in said phase.

2. Method according to Claim 1, wherein said linear variation (ΔP/Δt) is determined as a ratio between the difference of the reference values at the start and at the end of the phase, and the duration of said phase.

3. Method according to Claim 1, carried out in a mixer (1) of the closed type comprising a pair of rotors (2, 3) counter-rotating inside a mixing chamber (4), and a pressing ram (8) operating inside said chamber in position above the rotors,
wherein the direct process parameters comprise at least one parameter selected from the group including the speed of the rotors (2, 3) and the pressure of the ram (8).

4. Method according to Claim 3, wherein the indirect process parameters comprise at least one parameter selected from the group which includes: temperature of the mixture or of the compound being processed, power applied to the rotors, torque applied to the rotors, energy supplied to the rotors, degree of progress of the chemical reactions between ingredients of the mixture or the compound.

5. Method according to Claim 4, wherein the indirect process parameter is the degree of progress of the chemical reaction between polymer base, silica and silane.

6. Method according to Claim 1, wherein the reference values of the indirect process parameters at the start and at the end of said at least one phase are mean values obtained experimentally.

7. Method according to Claim 1, wherein regulation of the values of said direct process parameters is performed using an algorithm of the proportional-integral type.

8. Method according to Claim 1, wherein the processed mixtures comprise the following ingredients, in variable quantities expressed per hundred parts by weight (phr) of polymer base:
| | |
|---|---|
| Polymer base | 100 |
| Carbon black | 0-80 |
| Silica | 10-80 |
| Bonding agent (of the silica) | 4-15% of silica |
| Zinc oxide (ZnO) | 1-3 |
| Stearic acid | 0-3 |
| Anti-aging agents | 1-3 |
| Plasticizing oil | 0-30 |
| Anti-ozone wax | 0.5-3 |
| Specific chemical ingredients | 0-15 |

## Patentansprüche

1. Verfahren zum Herstellen von Polymer als Hauptbestandteil aufweisenden Massen und Mischungen, welches die Regulierung von wenigstens einem indirekten Prozessparameter einschließt, die durch Einwirken auf wenigstens einen direkten Prozessparameter ausgeführt wird, **dadurch gekennzeichnet, dass** das Verfahren die folgenden Phasen aufweist:
- Aufteilen der Herstellung in eine Vielzahl von aufeinanderfolgenden Phasen,
- Bestimmen einer auf die Zeit bezogenen linearen Referenzvariation (ΔP/Δt) von wenigstens einem indirekten Prozessparameter in wenigstens einer der Phasen und
- Regulieren wenigstens eines der direkten Prozessparameter derart, dass wenigstens ein indirekter Parameter entsprechend der linearen Referenzvariation in der genannten Phase variiert wird.

2. Verfahren nach Anspruch 1, bei welchem die lineare Variation (ΔP/Δt) als Verhältnis aus der Differenz von Referenzwerten am Anfang und am Ende der Phase und der Dauer der Phase bestimmt wird.

3. Verfahren nach Anspruch 1, durchgeführt in einem Mischer (1) der geschlossenen Bauweise mit einem Paar von Rotoren (2, 3), die innerhalb einer Mischkammer (4) gegeneinander rotieren, und mit einem Pressstempel (8), der innerhalb der Kammer in einer Position über den Rotoren arbeitet, wobei die direkten Prozessparameter wenigstens einen Parameter aufweisen, der aus der Gruppe ausgewählt wird, zu der die Drehzahl der Rotoren (2, 3) und der Druck des Stempels (8) gehören.

4. Verfahren nach Anspruch 3, bei welchem die indirekten Prozessparameter wenigstens einen Parameter aufweisen, der aus der Gruppe ausgewählt wird, zu der die Temperatur der herzustellenden Mischung oder Masse, die den Rotoren zugeführte Leistung, das an die Rotoren angelegte Drehmoment, die den Rotoren zugeführte Energie und der Fortschrittsgrad der chemischen Reaktionen zwischen Bestandteilen der Mischung oder der Masse gehören.

5. Verfahren nach Anspruch 4, bei welchem der indirekte Prozessparameter der Fortschrittsgrad der chemischen Reaktion zwischen dem Polymer-Hauptbestandteil, Siliciumdioxid und Silan ist.

6. Verfahren nach Anspruch 1, bei welchem die Referenzwerte der indirekten Prozessparameter am Anfang und am Ende der wenigstens einen Phase experimentell erhaltene Mittelwerte sind.

7. Verfahren nach Anspruch 1, bei welchem die Regulierung der Werte der direkten Prozessparameter unter Verwendung eines Algorithmus des Proportional-Integral-Typs ausgeführt wird.

8. Verfahren nach Anspruch 1, bei welchem die hergestellten Mischungen die folgenden Bestandteile in variablen Mengen ausgedrückt pro hundert Gewichtsteile (phr) Polymer-Hauptbestandteil aufweisen:
| | |
|---|---|
| Polymer-Hauptbestandteil | 100 |
| Ruß | 0 bis 80 |
| Siliciumdioxid | 10 bis 80 |
| Bindemittel (des Siliciumdioxids) | 4 bis 15% des Siliciumdioxids |
| Zinkoxid (ZnO) | 1 bis 3 |
| Stearinsäure | 0 bis 3 |
| Alterungsschutzmittel | 1 bis 3 |
| Plastifizieröl | 0 bis 30 |
| Ozonschutzwachs | 0,5 bis 3 |
| Spazielle chemisch Bestandteile | 0 bis 15 |

## Revendications

1. Procédé de traitement de combinaisons et de mélanges à base de polymère, qui comprend le réglage d'au moins un paramètre indirect de procédé, réglage effectué en agissant sur au moins un paramètre direct de procédé, procédé **caractérisé en ce qu'**il comprend les étapes suivantes :
- on divise le traitement en plusieurs phases successives,
- on fixe une variation linéaire de référence par rapport au temps (ΔP/Δt) d'au moins un paramètre indirect de procédé P dans au moins l'une desdites phases,
- on règle au moins l'un desdits paramètres directs de procédé de façon à faire varier ledit au moins paramètre indirect conformément à la variation linéaire de référence dans ladite phase.

2. Procédé selon la revendication 1, dans lequel ladite variation linéaire (ΔP/Δt) est définie comme étant le quotient de la différence des valeurs de référence au début et à la fin de la phase par la durée de ladite phase.

3. Procédé selon la revendication 1, qui est réalisé dans un mélangeur (1) du type fermé, comprenant une paire de rotors (2, 3) tournant en sens inverse à l'intérieur d'une chambre de mélange (4), et un piston compresseur (8) fonctionnant à l'intérieur de ladite chambre en une position située au-dessus des rotors, et dans lequel les paramètres directs de procédé comprennent au moins un paramètre pris parmi la vitesse des rotors (2, 3) et la pression du piston (8).

4. Procédé selon la revendication 3, dans lequel les paramètres indirects de procédé comprennent au moins un paramètre pris parmi la température du mélange ou de la combinaison en cours de traitement, la puissance appliquée aux rotors, le couple appliqué aux rotors, l'énergie fournie aux rotors, et le degré d'avancement des réactions chimiques entre les ingrédients du mélange ou de la combinaison.

5. Procédé selon la revendication 4, dans lequel le paramètre indirect de procédé est le degré d'avancement de la réaction chimique entre le polymère de base, la silice et le silane.

6. Procédé selon la revendication 1, dans lequel les valeurs de référence des paramètres indirects de procédé au début et à la fin de ladite au moins une phase sont des valeurs moyennes obtenues expérimentalement.

7. Procédé selon la revendication 1, dans lequel on réalise le réglage des valeurs desdits paramètres directs de procédé en utilisant un algorithme du type proportionnel-intégral.

8. Procédé selon la revendication 1, dans lequel le mélange traité est un mélange comprenant les ingrédients suivants, en des quantités variables, données en parties en poids pour cent parties en poids de polymère de base (ppc) :
| | |
|---|---|
| Polymère de base | 100 |
| Noir de carbone | 0-80 |
| Silice | 10-80 |
| Agent de liaison (de la silice) | 4 à 15 % par rapport à la silice |
| Oxyde de zinc (ZnO) | 1-3 |
| Acide stéarique | 0-3 |
| Agents anti-vieillissement | 1-3 |
| Huile plastifiante | 0-30 |
| Cire anti-ozone | 0,5-3 |
| Ingrédients chimiques spécifiques | 0-15 |
